# EUROPEAN PATENT SPECIFICATION

(11) **EP 2 371 494 B1**
(45) Date of publication and mention of the grant of the patent: **21.09.2016**
(21) Application number: 09831748.0
(22) Date of filing: 06.08.2009
(51) Int. Cl.: B26B 13/14, B23D 29/02, B26B 13/26

(54) **MANUALLY OPERATED CABLE CUTTING TOOL**
MANUELL BETÄTIGTES KABELSCHNEIDWERKZEUG
OUTIL DE COUPE DE CÂBLE À COMMANDE MANUELLE

(30) Priority: 10.12.2008 JP 2008314543
(43) Date of publication of application: 05.10.2011
(73) Proprietor: Minoru Kogyo Co., Ltd., Osaka 540-0005 (JP)
(72) Inventor: TAKAHASHI, Isao, Osaka-city Osaka 540-0005 (JP)
(74) Representative: White, Duncan Rohan
(86) International application number: PCT/JP2009/063927
(87) International publication number: WO 2010/067642

(56) References cited:
- JP-A- 8 276 079
- JP-A- 10 179 951
- JP-A- 10 249 072
- US-A- 4 982 500

## Description

### Technical Field

The present invention relates to a manually operated cable cutting tool which is appropriate to manually cut a reinforced wire rope in addition to a relatively thick plastic-coated cable made of a great number of bundled copper wires.

### Background Art

For the construction of the wiring for power lines and main lines that is led into buildings, it has been greatly necessary for conventional plastic-covered cables having a large diameter to be cut. Means for cutting plastic-covered cables having a large diameter can be roughly categorized into a mechanical cutting method for cutting a cable with a rotational cutting blade using a power source, such as a motor; a pressing and cutting method according to which a pressing and cutting apparatus, as shown in Japanese Unexamined Patent Publication H9 (1997)-155629, is placed and secured on the floor and a cable is cut when a lever is pressed down; and a hand-holding cutting method for cutting a cable when two levers are squeezed with one or two hands, much like a pair of pliers.

The present invention relates to a handheld cable cutting method from among these methods, and in particular to a manually operated tool, including a large-scale cutting tool operated with two hands and a cutting tool operated with one hand, such as a pair of pliers.

Though there are naturally some cases where two hands must be used for the cable cutting operation at the construction site for wiring, it is greatly beneficial to make it possible in accordance with a manually operated method using one hand to cut a cable having a large diameter that requires two hands for operation according to a conventional method so that the operation can be simplified and the efficiency and speed of the operation can be increased. However, in order for some thick cables to be cut width a one-hand cutting tool or even with a two-hand cutting tool, it is necessary for the cutting tool itself to be devised in a certain manner.

As a means to achieve this object, a structure where a magnification mechanism for increasing the cutting force is incorporated into the cutting tool, and a structure where a toggle mechanism, which is known as a magnification mechanism, is incorporated into the cutting tool have been publicly known, as in the following Patent Documents 1 and 2.

### Prior Art Documents

### Patent Documents

Patent Document 1: Japanese Unexamined Patent Publication H8 (1996)-276079
Patent Document 2: Japanese Unexamined Patent Publication 2007-143680.

US 4,982,500 discloses a manually cutting tool suitable for cutting thick material as leather. This document discloses a manually operated cable cutting tool, comprising: a left-and-right pair of operating handles connected to each other in the direction of the thickness by a pivot shaft (41); and a pair of cable cutting blade bodies that open and close when the handles are separated from and brought close to each other, wherein a second shaft (37), which is different from said pivot shaft (41), is provided to one of the operating handles so as to be located close to a grip section of the handle a second shaft hole (38), which is different from a shaft hole (37) in which said pivot shaft (41) is fitted, is created in the other handle so as to be located close to a grip section of the handle, the second shaft hole (38) is provided with a space for allowing the second shaft (36) to perform a required movement about an axis point which is one end section of said shaft hole (at least instant rotation, col. 5 lines 1-3).

### Summary of the Invention

### Problem to Be Solved by the Invention

In the cable cutter having a magnification mechanism incorporated, as described in Patent Document 1, a wheel supporting rod (27) in a hook shape is provided to one operating handle (grip lever 2), two sliding bearings (18) are secured to the other operating handle (grip lever 3), and the wheel (20) engaged in the bottom portion of the wheel supporting rod is fitted into the bearing hole (18a) created in a sliding bearing so as to be rotatable, and thus a structure for increasing the cutting force is provided. Such a magnification mechanism can be introduced into a cutter tool so that the force for cutting a cable can be increased.

In addition, in the manually operated cutting tool, as described in Patent Document 2, a left-and-right pair of cutting blades (1, 2) and a left-and-right pair of operating handles (3, 4) are formed as separate members, respectively The respective cutting blades extend towards the operating handles so that the terminal portions are respectively bent outwards in L shape, and the bent ends (12, 22) are connected to the first and second link pieces (51, 61) provided to the respective operating handles through axes so that toggle mechanisms are formed. These toggle mechanisms making a left-and-right pair increase the force for cutting a cable.

According to the prior art technologies described in Patent Documents 1 and 2, a generally known magnification mechanism is incorporated into a tool as a means for increasing the force for cutting a cable. That is to say, a special member for forming a magnification mechanism is attached to the main body of the tool. Therefore, the mass of the tool increases, the number of parts increases, and the assembly process is complicated, which causes a new problem, and thus the prior art technologies do not provide a preferable means for solving the problem with the tool for cutting a cable.

The present invention is provided in order to fundamentally solve the problems with the cable cutters and cable cutting tools according to the prior art technologies, and provides a cable cutting tool realized without an increase in the mass and the number of parts thereof, produced without making an assembly process complex and capable of easily cutting a cable with a force smaller than the force required in conventional cable cutting tools.

### Means for Solving Problem

The structure of the cable cutting tool according to Claim 1 of the present invention, which is provided in order to achieve the object, is described as follows with symbols used in an embodiment attached a manually operated cable cutting tool, having: a left-and-right pair of operating handles 1, 2 connected to each other in the direction of the thickness by a pivot shaft 5; and a pair of cable cutting blade bodies 3, 4 that open and close when the handles are separated from and brought close to each other, wherein a second shaft 7, which is different from the above described pivot shaft 5, is provided to one of the operating handles 1, 2 so as to be located close to a grip section of the handle, a second shaft hole 8, which is different from a shaft hole 6 in which the above described pivot shaft 5 is fitted, is created in the other handle 2, 1 so as to be located close to a grip section of the handle, the second shaft hole 8 is provided with a space 8b for allowing the second shaft 7 to perform a required movement about an axis point which is one end section 6a of the above described shaft hole 6, the above described shaft hole 6 is provided with a space 6b for allowing the pivot shaft 5 to perform a required movement about an axis point which is one end section 8a of the second shaft hole 8, and in the cutting of a cable, the two axis points, which are the end section 6a of the shaft hole 6 and the end section 8a of the second shaft hole 8, are automatically switched between each other in a single, continuous operation of the handles.

The manually operated cable cutting tool according to Claim 2 is the manually operated cable cutting tool according to Claim 1, wherein the shaft hole 6 is a short, flat oval and the second shaft hole 8 is an oval in arc form with the end section 6a of the shaft hole 6 as the center point of the arc.

### Effects of the Invention

As described above, in the present invention, a left-and-right pair of operating handles and cable cutting blade bodies that open and close when the handles are operated are connected by a pivot shaft. A second shaft that is different from this pivot shaft is provided to one operating handle so as to be located close to a grip section, and a second shaft hole, which is different from the shaft hole for the pivot shaft, is created in the other operating handle so as to be located close to a grip section. The second shaft hole is provided with a space 8b for allowing the second shaft 7 to perform a required movement about an axis point that is one end section of the shaft hole, and the shaft hole is provided with a space 6b for allowing the pivot shaft 5 to perform a required movement about an axis point that is one end section of the second shaft hole. In the cutting of a cable, the two axis points, which are the end section of the shaft hole and the end section of the second shaft hole, are automatically switched between each other in a single, continuous operation. Therefore, the cutting operation can be started without widely spreading the operating handles, and in the case of a tool operated with one hand, the cutting operation can be started as long as the handles can be squeezed. The pressure for cutting the center of the cable, which requires the highest cutting force, can be gained when the angle between the handles becomes close to half of the middle point, which is where the highest cutting force can be easily gained. At the point when it becomes possible to cut the cable with a low pressure after passing through the point that requires the highest cutting pressure, the axis point automatically shifts from the pivot shaft in the proximity of the cutting blade body to the second shaft that is located further away from the blade body than the pivot shaft, and after that the blade body greatly moves so that the blades are closed with the second shaft as a rotational axis so that the cable is fully cut.

Thus, the cable cutting tool according to the present invention makes it possible to start cutting a cable with the handles at an angle that makes it easy to grip with one or two hands without an increase in the mass and the number of parts of the cutting tool, and produced without making an assembly process complex. When the cable is cut in the middle portion where the highest pressure is required for cutting, the handles are spread to one's shoulder width so that the two-handed operation can provide the highest pressure, or the handles form an angle so that squeezing can provide the highest force. When the cutting blades pass the portion that requires the greatest pressure for cutting, reach the portion that does not require a large cutting pressure, and are close to the final cutting point, the cutting blades can be moved greatly in order to close with a small operation for a small angle between the handles using the second shaft as the rotational axis, and as a result the cutting of the cable can be completed. Thus, significant effects can be expected for the present invention.

According to the present invention, the cutting blades can be moved greatly in order to close with a small operation for a small angle between the handles at the final stage of operation for cutting a cable, and therefore the cutting operation can be started with the angle between the handles being small enough to make it easy to squeeze the handles. This is made possible by providing the second shaft, which is different from the pivot shaft in proximity to the cutting blade bodies, in a location further away from the cutting blade bodies than the pivot shaft.

### Brief Description of the Drawings

Fig 1 is a plan diagram showing the entirety of the cutting tool according to the present invention when not being used;
Fig 2 is a plan diagram showing the cutting tool with the handles fully extended;
Fig 3 is a plan diagram showing the cutting tool with the handles half-closed;
Fig 4 is a plan diagram showing the cutting tool with the handles slightly opened;
Fig 5 is a plan diagram showing an enlargement of a portion of one cutting blade body;
Fig 6 is a plan diagram showing an enlargement of a portion of shaft holes;
Fig 7 is a plan diagram showing part of the cutting tool to illustrate the relationship between the cutting blade bodies and a cable;
Fig 8 is a plan diagram showing a modification of the second shaft hole in the same manner as Fig 5; and
Fig 9 is a plan diagram showing modifications of the shaft hole and the second shaft hole in the same manner as Fig 5.

### Best Mode for Carrying Out the Invention

Since the present invention provides the above described structure, the shaft hole 6 is a long hole or a hole in arc form with one end section 8a of the second shaft hole 8 as the center point, and the second shaft hole 8 is a long hole in are form with one end section 6a of the shaft hole 6 as the center point, as described in Claim 2, in one embodiment of the present invention so that a tool of which the handles can open and close smoothly can be provided. These long holes provide a space for allowing one shaft, the second shaft 7 or the pivot shaft 5, to have free play while the other shaft, the pivot shaft 5 or the second shaft 7, is engaged in the operation, and the shapes thereof are not limited. Though they are conveniently referred to as holes, they may be notches with one end opened to the outside of a handle.

### Embodiments.

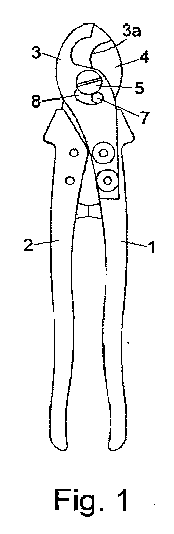

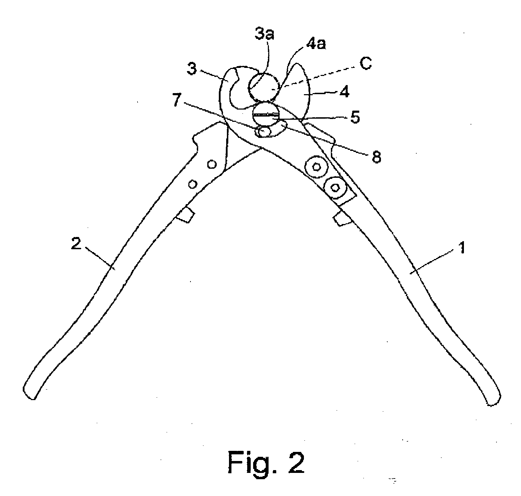

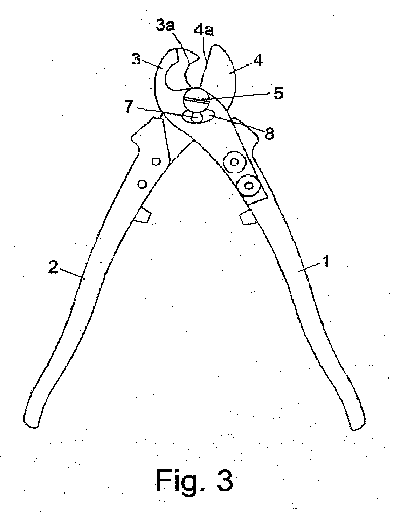

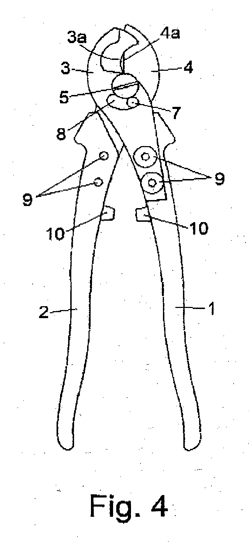

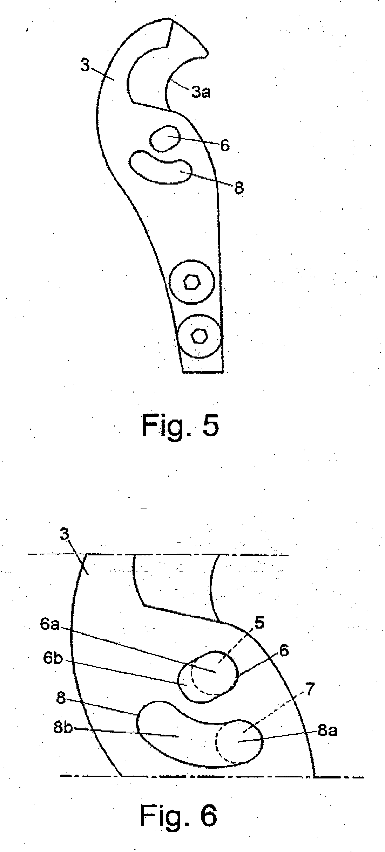

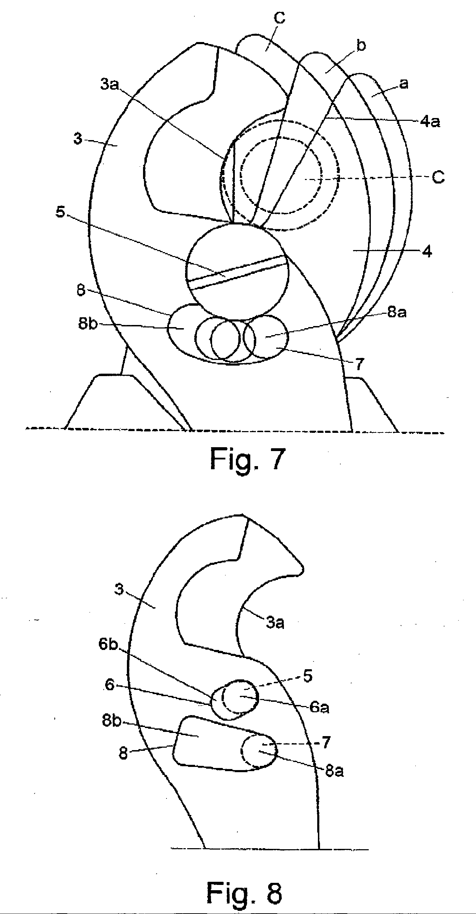

A main embodiment of the present invention is described below in reference to the drawings. Fig 1 is a plan diagram showing the entirety of the cutting tool according to the present invention when not being used; Fig 2 is a plan diagram showing the cutting tool with the handles fully extended; Fig 3 is a plan diagram showing the cutting tool with the handles half-closed; Fig 4 is a plan diagram showing the cutting tool with the handles slightly opened; Fig 5 is a plan diagram showing an enlargement of a portion of one cutting blade body; Fig 6 is a plan diagram showing an enlargement of a portion of shaft holes; and Fig 7 is a plan diagram showing part of the cutting tool to illustrate the relationship between the cutting blade bodies and a cable.

The cable cutting tool shown in these figures naturally makes it possible to cut a plastic-coated cable having a small diameter, and in addition, as shown in Fig 7, makes it possible to cut an IV · CV cable of which the conductor is a bundle of soft copper/aluminum wires having a cross section area of approximately 38 m² to 80 m² in the case where the cutting tool is handled with one hand and a thick, plastic-coated cable C having a cross section area of approximately 100 m² to 500 m² in the case where the cutting tool is handled with two hands. Though it has been difficult to cut such a thick cable with a conventional cutting tool for one hand operation or even for two hand operation, the need to do so at the construction site for wiring is considerably high.

The cable cutting tool in the present embodiment is appropriate for use in such a site for wiring, and as shown in Figs 1 to 5, is formed of a left-and-right pair of operating handles 1, 2 and a pair of cable cutting blade bodies 3, 4 that are integrally formed in the upper end portions of these operating handles 1, 2 in the same manner as a general cable cutting tool. The cable cutting blade bodies 3, 4 are connected through a pivot shaft 5 in the direction of the thickness so that these blade bodies 3, 4 are in an X shape in a plane view like pliers, and when these operating handles 1, 2 are separated from and brought close to each other, these blade bodies 3, 4 open and close.

This tool is different from general pliers in that a second shaft 7 is provided separately from the pivot shaft 5 for connecting the operating handles and these two shafts 5, 7 are both moving shafts, and two shaft holes 6, 8 are provided to allow the two shafts 5, 7 to move and work as a fulcrum.

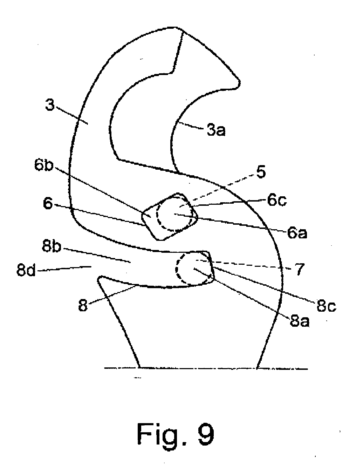

Concretely, the above described second shaft 7 is provided in one operating handle, that is the left operating handle 2 in Fig 1, so as to be located close to a grip section, that is to say on the bottom side in Fig 1. Separately from the shaft hole 6 for engaging the pivot shaft 5, the above described second shaft hole 8 is created in the other operating handle, that is to say the right operating handle 1 in Fig 1, so as to be located close to a grip section. Here, in Fig 4, 9 are connection pins and 10 are stoppers.

These two holes 6, 8 are created, as shown in Fig 5. In reference to Fig 6, which shows these holes as enlargements, the above described second shaft hole 8 is a long hole in arc form with one end section 6a of the above described shaft hole 6 as the center point, and the above described shaft hole 6 is a long hole in arc form, which is shorter than the second shaft hole 8, with one end section 8a of the second shaft hole 8 as the center point. The second shaft hole 8 is a long hole in arc form because it is necessary for the second shaft 7 to move while the cutting of a cable starts and comes close to the end with one end section 6a of the shaft hole 6 being used as the axis point. The above described shaft hole 6 is a long hole because it is necessary for the pivot shaft 5 to move during the cable cutting operation between when the cutting of a cable is in the stage close to the end and when it is completed with one end section 8a of the second shaft hole 8 being used as the axis point.

At this final cutting stage, the maximum load point is passed and the load for cutting is small, and therefore cutting is possible even when the axis point of the second shaft 7 is away from the cutting blades. When the axis point is far away, the movement of the cutting blades becomes great in the cutting direction.

Thus, a cable is cut from the start to close to the end with the one end section 6a of the shaft hole 6 in proximity to the cutting blade bodies 3, 4 as the axis point, and the cable is cut from the point close to the end to completion with the one section 8a of the second shaft hole 8 away from the cutting blade bodies 3, 4 as the axis point so that these two axis points are automatically switched within a single, continuous cutting operation when a cable is cut. Accordingly, it becomes possible to use one or two hands to easily cut a thick cable that was difficult to cut using a conventional cable cutting tool.

This cutting process is described in reference to Fig 7. For the purpose of convenience, this figure shows that the left cutting blade body 3 is in such a state that the cutting blade 3a receives a plastic-coated cable C, and only the right cutting blade body 4 is in such a state as to cut. It is not necessary to say that a cable is actually cut with the left and right blade bodies 3, 4 simultaneously. Thus, the plastic-coated cable C starts to be cut from the position where the left cutting blade body 3 receives the cable, as shown in Fig 2, passes the point a where the cable is cut in the middle point, as shown in Fig 7, and then passes the point b where the resistance is the highest and reaches the point c just before cutting is completed. The blade bodies move like a fan as the cable is cut from the initial point to the point c just before cutting is completed with the one end section 6a of the shaft hole 6 created in the closest proximity to the cutting blades 3a, 4a as the axis point.

During this operation, the second shaft 7 that has moved in arc form within the second shaft hole 8 makes contact with the one end section 8a of the second shaft hole 8, and the movement is stopped afterwards. Due to the pressure applied when the handles 1, 2 are further squeezed, the axis point shifts to the second shaft 7 that is located in the one end section 8a of the second shaft hole 8 created in a location away from the cutting blade bodies 3, 4, and the cable is cut from the point close to completion to completion with this second shaft 7 as the axis point. At this time, the cutting operation can be completed when the cutting blade bodies 3, 4 greatly move with the second shaft 7 as the axis point, and therefore the angle between the handles 1, 2 can be made small at the start of cutting. When the cable is cut in the middle point that requires the highest cutting pressure, the angle between the handles can be adjusted so that the force for squeezing the handles can be easily increased in the case of a cutting tool operated with one hand, and the angle between the handles can be adjusted so that the handles spread to a shorter width where the squeezing force can be easily increased in the case of a cutting tool operated with two hands.

Here, in the embodiment, the cutting blade bodies 3, 4 are formed separately from the handles 1, 2, and the cutting blade bodies 3, 4 are connected to the upper portions of the handles 1, 2 with screws in the structure. However, it is not necessary to say that these cutting blade bodies 3, 4 and the handles 1, 2 may be integrally formed in an embodiment.

In addition, one cutting blade 3a is in arc form with a large concave so that a cable can be held towards the pivot shaft 5 and the other cutting blade 4a has a straight edge in the embodiment. As for the form of the cutting blades 3a, 4a in the cutting blade bodies 3, 4, it is preferable for one cutting blade 3a to be in a concave arc form so that a cable can be easily held. The other cutting blade 4a can also be in a concave arc form, in arc form with a smaller concave, and in arc form with a small convex in an embodiment, for example.

It is preferable for the entire length of the cutting tool operated with one hand in the present specification to be approximately 200 mm to 300 mm. The entire length of the cutting tool operated with two hands may be greater than that, and for example, approximately 400 mm to 800 mm.

Figs 8 and 9 show modifications of the shaft hole 6 and the second shaft hole 8 created in the cutting blade body 3 (or 4), respectively. In Fig 8, the second shaft hole 8 is in fan form with the one end section 8a being the center point. In the modification in Fig 9, the one end section 6a of the shaft hole 6 on the axis point side and the one end section 8a of the second shaft hole 8 on the axis point side are squared so that the pressure applied to the shaft 5, 7 is received by the surface 6c, 8c. Though the form is not preferable from the point of view of strength, the second shaft hole 8 is substituted with a notch with the one side 8d being open to the outside of the blade body 3. The modification shows that the shaft holes 6 and 8 can be modified in this manner when the invention is implemented.

Though the typical embodiments of the present invention are described above, the present invention is not necessarily limited to the structures shown in the above described embodiments, but can be modified appropriately within the scope of the invention as long as the constituent features are provided, an object of the present invention is achieved, and the effects of the invention are gained.

### Industrial Applicability

The cable cutting tool according to the present invention makes it possible to easily and quickly cut a thick cable that was difficult to cut with a conventional cutting tool at a construction site, and therefore is preferably used when provided in the market. Explanation of Symbols

- 1: operating handle
- 2: operating handle
- 3: cable cutting blade body
- 4: cable cutting blade body
- 5: pivot shaft
- 6: shaft hole
- 6a: one end section of shaft hole
- 7: second shaft
- 8: second shaft hole
- 8a: one end section of second shaft hole

## Claims

1. A manually operated cable cutting tool, comprising: a left-and-right pair of operating handles (1, 2) connected to each other in the direction of the thickness by a pivot shaft (5); and a pair of cable cutting blade bodies (3, 4) that open and close when the handles are separated from and brought close to each other, wherein
a second shaft (7), which is different from said pivot shaft (5), is provided to one of the operating handles (1, 2) so as to be located close to a grip section of the handle,
a second shaft hole (8), which is different from a shaft hole (6) in which said pivot shaft (5) is fitted, is created in the other handle (2, 1) so as to be located close to a grip section of the handle,
the second shaft hole (8) is provided with a space (8b) for allowing the second shaft (7) to perform a required movement about an axis point which is one end section (6a) of said shaft hole (6),
said shaft hole (6) is provided with a space (6b) for allowing the pivot shaft (5) to perform a required movement about an axis point which is one end section (8a) of the second shaft hole (8), and
in the cutting of a cable, the two axis points, which are the end section (6a) of the shaft hole (6) and the end section (8a) of the second shaft hole (8), are automatically switched between each other in a single, continuous operation of the handles.

2. The manually operated cable cutting tool according to Claim 1, wherein the shaft hole (6) is a short, flat oval and the second shaft hole (8) is an oval in arc form with the end section (6a) of the shaft hole (6) as the center point of the arc.

## Patentansprüche

1. Manuell betätigtes Kabelschneidwerkzeug, das Folgendes umfasst: ein Paar aus einem linken und einem rechten Betätigungsgriff (1, 2), die miteinander in der Richtung der Dicke durch eine Schwenkachse (5) verbunden sind, und ein Paar von Kabelschneidklingenkörpern (3, 4), die sich öffnen und schließen, wenn die Griffe voneinander getrennt und nahe zueinander gebracht werden, wobei
eine zweite Achse (7), die sich von der Schwenkachse (5) unterscheidet, so an einem der Betätigungsgriffe (1, 2) bereitgestellt wird, dass sie nahe einer Greifsektion des Griffs angeordnet ist,
ein zweites Achsenloch (8), das sich von einem Achsenloch (6) unterscheidet, in dem die Schwenkachse (5) angebracht ist, so in dem anderen Griff (2, 1) geschaffen ist, dass es nahe einer Griffsektion des Griffs angeordnet ist,
das zweite Achsenloch (8) mit einem Raum (8b) versehen ist, um zu ermöglichen, dass die zweite Achse (7) eine erforderliche Bewegung um einen Achsenpunkt durchführt, der eine Endsektion (6a) des Achsenlochs (6) ist,
das Achsenloch (6) mit einem Raum (6b) versehen ist, um zu ermöglichen, dass die Schwenkachse (5) eine erforderliche Bewegung um einen Achsenpunkt durchführt, der eine Endsektion (8a) des zweiten Achsenlochs (8) ist, und
beim Schneiden eines Kabels die zwei Achsenpunkte, welche die Endsektion (6a) des Achsenlochs (6) und Endsektion (8a) des zweiten Achsenlochs (8) sind, in einer einzigen, kontinuierlichen Betätigung der Griffe automatisch zwischen einander gewechselt werden.

2. Manuell betätigtes Kabelschneidwerkzeug nach Anspruch 1, wobei das Achsenloch (6) ein kurzes, flaches Oval ist und das zweite Achsenloch (8) ein oval in Bogenform mit der Endsektion (6a) des Achsenlochs (6) als Mittelpunkt des Bogens ist.

## Revendications

1. Outil de coupe de câble à actionnement manuel, comprenant une paire de poignées d'actionnement de gauche et de droite (1, 2) connectées l'une à l'autre dans la direction de l'épaisseur par un arbre de pivotement (5), et une paire de corps de lame de coupe de câble (3, 4) qui s'ouvrent et se ferment lorsque les poignées sont séparées l'une de l'autre et rapprochées étroitement l'une de l'autre, dans lequel :
un deuxième arbre (7), différent dudit arbre de pivotement (5) est agencé sur l'une des poignées d'actionnement (1, 2) de sorte à être agencé près d'une section de préhension de la poignée ;
un deuxième trou d'arbre (8), différent d'un trou d'arbre (6) dans lequel ledit arbre de pivotement est fixé, est formé dans l'autre poignée (2, 1) de sorte à être agencé près d'une section de préhension de la poignée ;
le deuxième trou d'arbre (8) comporte un espace (8b) pour permettre au deuxième arbre (7) d'effectuer un déplacement requis autour d'un point d'axe, constituant une section d'extrémité (6a) du trou d'arbre (6) ;
le trou d'arbre (6) comporte un espace (6b) pour permettre à l'arbre de pivotement (5) d'effectuer un déplacement requis autour d'un point d'axe, constituant une section d'extrémité (8a) du deuxième trou d'arbre (8) ; et
lors de la coupe d'un câble, les deux points d'axe, constituant la section d'extrémité (6a) du trou d'arbre (6) et la section d'extrémité (8a) du deuxième trou d'arbre (8), sont commutés automatiquement entre eux, par un seul actionnement continu des poignées.

2. Outil de coupe de câble à actionnement manuel selon la revendication 1, dans lequel le trou d'arbre (6) est un trou court, plat et ovale, le deuxième trou d'arbre (8) étant un trou ovale en forme d'arc, la section d'extrémité (6a) du trou d'arbre (6) constituant le point central de l'arc.
